# EUROPEAN PATENT APPLICATION

(11) **EP 3 467 820 A1**
(43) Date of publication of application: **10.04.2019**
(21) Application number: 17802366.9
(22) Date of filing: 21.02.2017
(51) Int. Cl.: G10L 15/22, G06F 3/0488, G06F 3/16, G06F 17/24, G06F 17/30, G10L 15/00, G10L 15/24

(54) **INFORMATION PROCESSING DEVICE AND INFORMATION PROCESSING METHOD**

(30) Priority: 23.05.2016 JP 2016102755
(71) Applicant: Sony Corporation, Tokyo 108-0075 (JP)
(72) Inventor: YOKOYAMA, Saki, Tokyo 108-0075 (JP)
(74) Representative: MFG Patentanwälte Meyer-Wildhagen Meggle-Freund Gerhard PartG mbB
(86) International application number: PCT/JP2017/006281
(87) International publication number: WO 2017/203764

(57) **Abstract**

[Object] To provide an information processing device and information processing method that are capable of emending a sentence by inputting voice.

[Solution] The information processing device includes: a transmission unit configured to transmit voice information including an emendatory command and an emendation target of a sentence; and a reception unit configured to receive a process result based on the emendatory command and the emendation target.

## Description

### Technical Field

The present disclosure relates to an information processing device and an information processing method.

### Background Art

In recent years, technologies of inputting commands by voice have been developed. For example, when inputting a command by voice, a speech recognition system recognizes a text of a user speech, performs syntax analysis on the recognized text, and executes a command on a basis of a result of the analysis. With regard to such a speech recognition system, for example, Patent Literature 1 listed below describes a speech recognition repair method for repairing a speech recognition result by using context information. The context information includes a user input history and a conversation history.

### Citation List

### Patent Literature

Patent Literature 1: JP 2015-018265A

### Disclosure of Invention

### Technical Problem

However, in the case of inputting words by voice, sometimes operation through a physical word input interface is necessary for deleting/correcting a word, changing the type of words to be input, and the like. In addition, sometimes voice for deleting/correcting a word is recognized as it is and the words recognized from the voice are input as a speech recognition result.

Accordingly, the present disclosure proposes an information processing device and information processing method that are capable of emending a sentence by inputting voice.

### Solution to Problem

According to the present disclosure, there is provided an information processing device including: a transmission unit configured to transmit voice information including an emendatory command and an emendation target of a sentence; and a reception unit configured to receive a process result based on the emendatory command and the emendation target.

According to the present disclosure, there is provided an information processing device including: a reception unit configured to receive voice information including an emendatory command and an emendation target of a sentence; and a transmission unit configured to transmit a process result based on the emendatory command and the emendation target.

According to the present disclosure, there is provided an information processing method including, by a processor: transmitting voice information including an emendatory command and an emendation target of a sentence; and receiving an analysis result based on the emendatory command and the emendation target.

According to the present disclosure, there is provided an information processing method including, by a processor: receiving voice information including an emendatory command and an emendation target of a sentence; and transmitting an analysis result based on the emendatory command and the emendation target.

### Advantageous Effects of Invention

As described above, according to the present disclosure, it is possible to emend a sentence by inputting voice.

Note that the effects described above are not necessarily limitative. With or in the place of the above effects, there may be achieved any one of the effects described in this specification or other effects that may be grasped from this specification.

### Brief Description of Drawings

FIG. 1 is a diagram illustrating an overview of an information processing system according to the present embodiment.
FIG. 2 is a block diagram illustrating an example of a configuration of a client terminal according to the present embodiment.
FIG. 3 is a block diagram illustrating an example of a configuration of a server according to the present embodiment.
FIG. 4 is a diagram illustrating specific examples of a case where types of input words are designated by voice according to the present embodiment.
FIG. 5 is a diagram illustrating specific examples of a case where kana-to-kanji conversion of input words is designated by voice according to the present embodiment.
FIG. 6 is a diagram illustrating an example of a user speech and a result of analyzing emendatory information according to the present embodiment.
FIG. 7 is a diagram illustrating an example of a final output result in response to the user speech illustrated in FIG. 6.
FIG. 8 is a diagram illustrating an example of a user speech and a result of analyzing emendatory information in view of context information according to the present embodiment.
FIG. 9 is a diagram illustrating an example of a final output result in response to the user speech illustrated in FIG. 8.
FIG. 10 is a flowchart illustrating an operation process of the information processing system according to the present embodiment.
FIG. 11 is a diagram illustrating another system configuration according to the present embodiment.
FIG. 12 is a block diagram illustrating an example of a configuration of an edge server according to the present embodiment.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that, the description is given in the following order.
1. Overview of information processing system according to embodiment of present disclosure
2. Configurations
   2-1. Configuration of client terminal
   2-2. Configuration of server
3. Operation process
4. Another system configuration
5. Conclusion

### <<1. Overview of information processing system according to embodiment of present disclosure>>

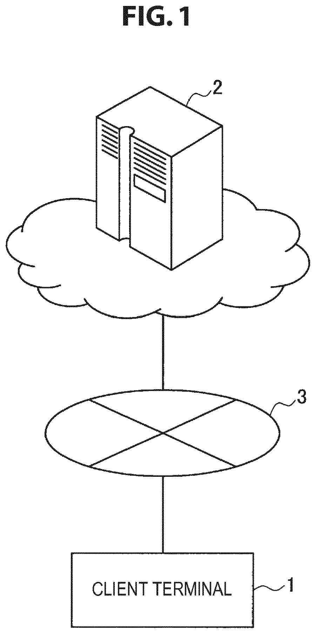

First, the overview of an information processing system according to an embodiment of the present disclosure will be described. FIG. 1 is a diagram illustrating the overview of the information processing system according to the present embodiment. As illustrated in FIG. 1, the information processing system according to the present embodiment includes a client terminal 1 and a server 2. For example, the client terminal 1 and the server 2 are connected via a network 3 to exchange data.

The information processing system according to the present embodiment is a speech recognition system that achieves input of words by voice. The information processing system recognizes voice of a user speech collected by the client terminal 1, analyzes a text, and outputs the text to the client terminal 1 as a result of the analysis.

For example, the client terminal 1 may be a smartphone, a tablet terminal, a mobile phone terminal, a wearable terminal, a personal computer, a game console, a music player, or the like.

Here, it is difficult for existing speech recognition systems to change types of words by voice (such as switching among upper case, lower case, romanized text, numerical digits, hiragana, katakana, and the like), and operation through a physical word input interface is necessary. In addition, when voice for deleting, inserting, or correcting a sentence or the like is input for emending the input sentence, the voice is recognized as it is and words recognized from the voice are input as a speech recognition result. Therefore, it is difficult to emend sentences by voice.

In addition, kanji include homophones. Therefore, sometimes a desired kanji does not appear through one-time conversion, and sometimes it is necessary to switch from voice input to input using a physical word input interface because it is impossible to extract kanji desired by a user.

With regard to such problems, the information processing system according to the present embodiment achieves emendation of sentences by using voice input, and eliminates cumbersome operation such as switching from voice input to input using a physical word input interface at a time of emendation. Specifically, the information processing system according to the present embodiment determines whether a user speech is an emendatory speech or a general speech when analyzing the text of the user speech, and analyzes emendatory information in the case where the user speech is the emendatory speech.

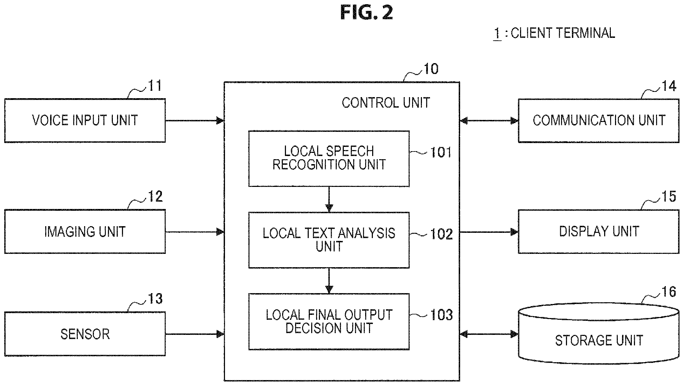

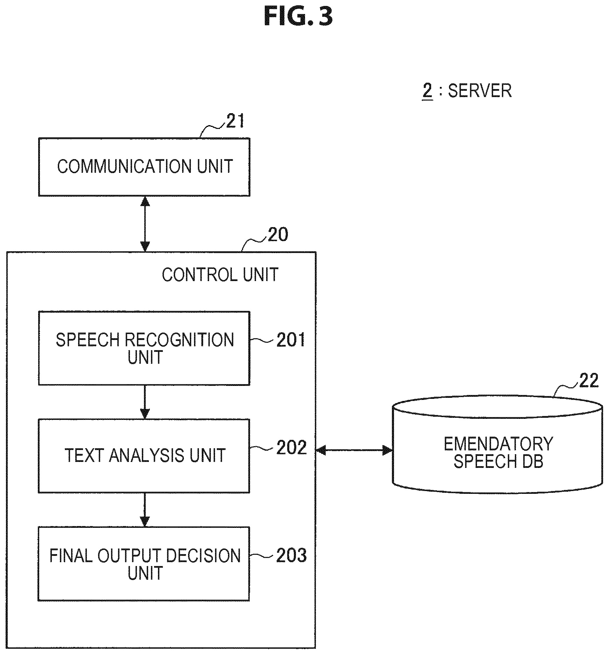

The overview of the information processing system according to the embodiment has been described above. Next, with reference to FIG. 2 and FIG. 3, configurations of respective devices included in the information processing system according to the present embodiment will be described.

### <<2. Configurations>>

### <2-1. Configuration of client terminal>

FIG. 2 is a block diagram illustrating an example of the configuration of the client terminal 1 according to the present embodiment. As illustrated in FIG. 2, the client terminal 1 (information processing device) includes a control unit 10, a voice input unit 11, an imaging unit 12, a sensor 13, a communication unit 14, a display unit 15, and a storage unit 16.

The control unit 10 functions as an arithmetic processing device and a control device, and controls the overall operation in the client terminal 1 in accordance with various programs. For example, the control unit 10 is implemented by a central processing unit (CPU), and an electronic circuit such as a microprocessor or the like. In addition, the control unit 10 may include read only memory (ROM) for storing programs, arithmetic parameters, and the like to be used, and random access memory (RAM) for temporarily storing parameters and the like that arbitrarily change.

The control unit 10 transmits the voice of a user speech from the communication unit 14 to the server 2 via the network 3. The voice of the user speech is input through the voice input unit 11. The form of voice information to be transmitted may be collected voice data (raw data), feature amount data extracted from the collected voice data (data processed to some extent such as a phoneme sequence), or a text analysis result of the collected voice data. The text analysis result of the voice data is a result obtained by analyzing an emendatory command part and an emendation target part that are included in the voice of the user speech, for example. Such an analysis may be conducted by a local text analysis unit 102 (to be described later). Note that, in the present specification, the "emendatory command" indicates how to emend an emendation target. For example, correction of an input character string such as deletion, replacement, or addition, designation of input word type (such as alphabet, upper case, lower case, hiragana, or katakana), and designation of expression of input words (such as kanji or spelling) are assumed as the "emendatory command". In addition, in the present specification, the "emendation target" indicates a target of an emendatory command.

In addition, the control unit 10 transmits a captured image or sensor information (screen touch information or the like) from the communication unit 14 to the server 2 via the network 3, as context information. The captured image is an image of a user motion captured by the imaging unit 12 at a time of user speech, and the sensor information is information detected by the sensor 13. The form of the context information to be transmitted may be the acquired captured image or sensor information (raw data), feature amount data extracted from the acquired captured image or sensor information (data processed to some extent such as vectorization), or an analysis result of the acquired captured image or sensor information (recognition result). For example, the analysis result of the captured image or sensor information may be a result obtained by recognizing operation or motion of a user.

As illustrated in FIG. 2, the control unit 10 may also function as a local speech recognition unit 101, a local text analysis unit 102, and a local final output decision unit 103.

The local speech recognition unit 101 performs speech recognition on a voice signal of a user speech input via the voice input unit 11, and converts the user speech into a text. The local speech recognition unit 101 according to the present embodiment is a subset of a speech recognition unit 201 of the server 2 (to be described later). The local speech recognition unit 101 has a simple speech recognition function.

The local text analysis unit 102 analyzes a character string obtained by converting voice into a text through speech recognition. Specifically, the local text analysis unit 102 refers to emendatory speech data that is previously stored in the storage unit 16, and analyzes whether the character string is a mere speech for inputting words (general speech) or an emendatory speech. The local text analysis unit 102 outputs emendatory-speechness, and outputs an emendation target and an emendatory command in the case where the character string is the emendatory speech. The emendatory-speechness is calculated as a score indicating a confidence rating. In addition, the local text analysis unit 102 may output a plurality of candidates in addition to their scores. In addition, the local text analysis unit 102 may conduct the analysis in view of an image captured by the imaging unit 12 or sensor information detected by another sensor 13 (acceleration sensor information, touch sensor information, or the like) at a time of user speech. In addition, the local text analysis unit 102 according to the present embodiment is a subset of a text analysis unit 202 of the server 2 (to be described later). The local text analysis unit 102 has a simple analysis function. Specifically, an amount of data of emendatory speeches used by the local text analysis unit 102 is smaller than an amount of data stored in the server 2. Therefore, for example, the local text analysis unit 102 can understand an emendatory word "delete", but cannot understand words such as "I want to cancel" or "would you mind canceling".

The local final output decision unit 103 has a function of deciding what to finally output. For example, the local final output decision unit 103 determines whether a user speech is a general speech or an emendatory speech on the basis of a text analysis result or a specific keyword (such as "emendation mode" or "switch") extracted through speech recognition. In the case where it is determined that the user speech is the general speech, the local final output decision unit 103 outputs a character string obtained through speech recognition on a screen of the display unit 15 as it is. On the other hand, in the case where it is determined that the user speech is the emendatory speech, the local final output decision unit 103 performs an emendation process on the input sentence on the basis of the emendation target and the emendatory command that have been analyzed by the local text analysis unit 102, and outputs a result of the emendation to the screen of the display unit 15. Note that, in the case where a plurality of analysis results are obtained, the local final output decision unit 103 may decide which of the analysis results to use with reference to scores indicating confidence ratings of the respective candidates.

Note that, the local final output decision unit 103 according to the present embodiment is a subset of a final output decision unit 203 of the server 2 (to be described later). The local final output decision unit 103 has a simple decision function.

The functional configuration of the control unit 10 has been described above. The control unit 10 is capable of speeding up the process speed by using the local subsets such as the local speech recognition unit 101, the local text analysis unit 102, and the local final output decision unit 103. However, the present embodiment is not limited thereto. For example, in the case where the process is not sufficiently performed using the subsets or in the case where an error occurs, the control unit 10 may transmit data to the server 2, request the server 2 to perform the process, receives a result of the process from the server 2, and use the result. Alternatively, the control unit 10 may transmit data to the server 2, request the server 2 to perform the process while the subsets are performing the process, and select data to be used by waiting a result of the process from the server 2 a predetermined period of time or by referring to scores indicating confidence ratings of the respective results of the process.

The voice input unit 11 collects user voice and ambient environmental voice, and outputs voice signals to the control unit 10. Specifically, the voice input unit 11 may be implemented by a microphone, an amplifier, and the like. Alternatively, the voice input unit 11 may be implemented by a microphone array including a plurality of microphones.

The imaging unit 12 captures images of surroundings of the face of a user or images of a motion of the user, and outputs the captured images to the control unit 10. The imaging unit 12 includes a lens system, a drive system, a solid state image sensor array, and the like. The lens system includes an imaging lens, a diaphragm, a zoom lens, a focus lens, and the like. The drive system causes the lens system to carry out focus operation and zoom operation. The solid state image sensor array performs photoelectric conversion on imaging light acquired by the lens system and generates an imaging signal. The solid state image sensor array may be implemented by a charge-coupled device (CCD) sensor array or a complementary metal-oxide-semiconductor (CMOS) sensor array, for example.

The sensor 13 is a generic term that indicates various sensors other than the imaging unit 12 (imaging sensor). For example, an acceleration sensor, a gyro sensor, a touch sensor installed on the screen of the display unit 15, and the like are assumed as the sensor 13. The sensor 13 outputs detected sensor information to the control unit 10.

The communication unit 14 is a communication module to transmit/receive data to/from another device in a wired/wireless manner. The communication unit 14 communicates directly with an external device or communicates with the external device via a network access point, by means of a wired local area network (LAN), a wireless LAN, Wireless Fidelity (Wi-Fi) (registered trademark), infrared communication, Bluetooth (registered trademark), near field communication, non-contact communication, or the like.

For example, the display unit 15 is implemented by a liquid crystal display (LCD) device, an organic light emitting diode (OLED) device, or the like. The display unit 15 displays information on a display screen under the control of the control unit 10.

The storage unit 16 stores a program and the like to be used by the control unit 10 for executing various processes. In addition, the storage unit 16 may be implemented by a storage device including a storage medium, a recording device which records data in the storage medium, a reader device which reads data from the storage medium, a deletion device which deletes data recorded in the storage medium, and the like.

The detailed configuration of the client terminal 1 according to the embodiment has been described above. Note that, the configuration of the client terminal 1 according to the present embodiment is not limited to the example illustrated in FIG. 2. For example, the client terminal 1 does not have to include a part or all of the local speech recognition unit 101, the local text analysis unit 102, and the local final output decision unit 103.

In addition, although the information processing system including the client terminal 1 and the server 2 has been described in the present embodiment, the present technology may be achieved by a single information processing device including the respective structural element described with reference to FIG. 2 to FIG. 3 as a client module and a server module. Alternatively, the structural elements of the client terminal 1 may have functions similar to respective structural elements (the speech recognition unit 201, the text analysis unit 202, and the final output decision unit 203) of a control unit 20 in the server 2 (to be described later with reference to FIG. 3).

### <2-2. Configuration of server>

FIG. 3 is a block diagram illustrating an example of the configuration of the server 2 according to the present embodiment. As illustrated in FIG. 3, the server 2 (information processing device) includes a control unit 20, a communication unit 21, and an emendatory speech database (DB) 22.

The control unit 20 functions as an arithmetic processing device and a control device, and controls the overall operation in the server 2 in accordance with various programs. For example, the control unit 20 is implemented by a central processing unit (CPU), and an electronic circuit such as a microprocessor or the like. In addition, the control unit 20 may include read only memory (ROM) for storing programs, arithmetic parameters, and the like to be used, and random access memory (RAM) for temporarily storing parameters and the like that arbitrarily change.

The control unit 20 performs control such that the speech recognition process, the text analysis process, and the final output decision process are performed on the basis of voice of a user speech received from the client terminal 1, and results of the processes (speech recognition result, text analysis result, or emendatory information (such as emendation result)) is transmitted to the client terminal 1.

As illustrated in FIG. 3, the control unit 20 may also function as a speech recognition unit 201, a text analysis unit 202, and a final output decision unit 203.

The speech recognition unit 201 performs speech recognition on a voice signal of a user speech transmitted from the client terminal 1, and converts the user speech into a text.

The text analysis unit 202 analyzes a character string obtained by converting the user speech into a text through speech recognition. Specifically, the text analysis unit 202 refers to emendatory speech data that is previously stored in the emendatory speech DB 22, and analyzes whether the character string is a mere speech for inputting words (general speech) or an emendatory speech. The text analysis unit 202 outputs emendatory-speechness, and outputs an emendation target and an emendatory command in the case where the character string is the emendatory speech. The emendatory-speechness is calculated as a score indicating a confidence rating. In addition, the text analysis unit 202 may output a plurality of candidates in addition to their scores. In addition, the text analysis unit 202 may conduct the analysis in view of context information (captured image or sensor information) transmitted from the client terminal 1 at a time of the user speech.

Note that, the analysis of emendatory information is not limited to the method using the emendatory speech DB 22 that has been generated in advance. For example, it is possible to use machine learning to improve accuracy of the analysis of emendatory information.

The final output decision unit 203 has a function of deciding what to finally output. For example, the final output decision unit 203 determines whether a user speech is a general speech or an emendatory speech on the basis of a text analysis result or a specific keyword (such as "emendation mode" or "switch") extracted through speech recognition. In the case where a plurality of analysis results are obtained, the final output decision unit 203 may decide which of the analysis results to use with reference to scores indicating confidence ratings of the respective candidates.

In the case where it is determined that the user speech is the general speech, the final output decision unit 203 transmits a character string obtained through speech recognition from the communication unit 21 to the client terminal 1. On the other hand, in the case where it is determined that the user speech is the emendatory speech, the final output decision unit 203 processes an emendation target on the basis of a finally decided emendatory command that has been analyzed by the text analysis unit 202, and transmits an emendation result from the communication unit 21 to the client terminal 1 as emendatory information.

In addition, the final output decision unit 203 may analyze an image of a motion of a user captured by the imaging unit 12, detect a pre-registered body motion, and switch between a general input mode and a sentence emendation mode. The captured image is transmitted from the client terminal 1 as the context information. Alternatively, the final output decision unit 203 may analyze sensor information detected by the sensor 13, detect a pre-registered motion (such as shake of the screen, touch to the screen, or the like), and switch between the general input mode and the sentence emendation mode. The sensor information is transmitted from the client terminal 1 as the context information.

In addition, the final output decision unit 203 is also capable of determining whether or not the user speech is an emendatory speech by combining a text analysis result of the user speech and a captured image or sensor information. For example, in the case where the user says "delete all the following sentences from here" while pointing to a word displayed on a screen, the final output decision unit 203 determines that the user speech indicates the sentence emendation mode from an analysis result of contents of the speech and the motion of pointing to the word on the screen.

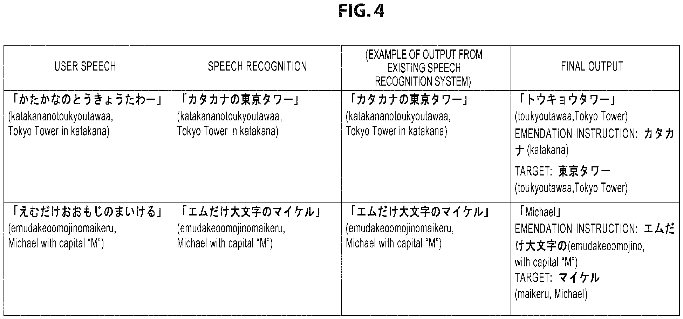

Next, with reference to FIG. 4 to FIG. 9, details of examples of user speeches and final output examples of the respective speeches according to the present embodiment will be described.

### (A) Designation of types of words

FIG. 4 is a diagram illustrating specific examples of a case where types of input words are designated by voice. For example, in the case where a user says "katakananotoukyoutawaa" ( 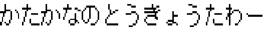 , Tokyo Tower in katakana) as illustrated in a first row of FIG. 4, the speech recognition unit 201 outputs a character string " 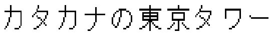 " (Tokyo Tower in katakana) through speech recognition. In this case, there is a possibility that existing speech recognition systems output the character string " 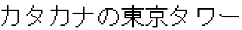 " obtained through the speech recognition, as it is. On the other hand, according to the present embodiment, it is possible to perform text analysis on the character string obtained through the speech recognition with reference to the emendatory speech data, determine that " 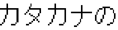 " (katakanano, in katakana) means designation of emendation of the types of words to "katakana" on the basis of the speech recognition result, and determine that " 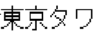 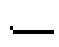 " (toukyoutawaa, Tokyo Tower) is an emendation target. Accordingly, as illustrated in the first row of FIG. 4, a final output result shows " 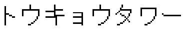 " (Tokyo Tower) in katakana.

Alternatively, in the case where a user says "emudakeoomojinomaikeru" ( 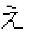 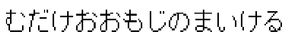 . Michael with capital "M") as illustrated in a second row of FIG. 4, the speech recognition unit 201 outputs a character string " 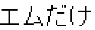 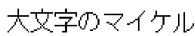 " (Michael with capital "M") through speech recognition. In this case, there is a possibility that existing speech recognition systems output the character string " 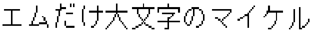 " obtained through the speech recognition, as it is. On the other hand, according to the present embodiment, it is possible to perform text analysis on the character string obtained through the speech recognition with reference to the emendatory speech data, determine that "emudakeoomojino" ( 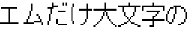 , with capital "M") means designation of emendation of the type of a word to "upper-case alphabet" on the basis of the speech recognition result, and determine that " 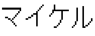 " (Michael) is an emendation target. Accordingly, as illustrated in the second row of FIG. 4, a final output result shows "Michael".

### (B) Usage of sound and transcription

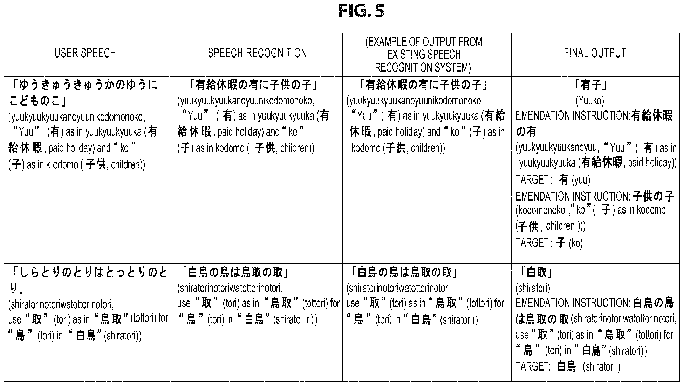

FIG. 5 is a diagram illustrating specific examples of a case where kana-to-kanji conversion of input words is designated by voice. For example, in the case where a user says "yuukyuukyuukanoyuunikodomonoko" ( 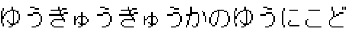 " 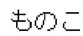 , "Yuu" ( 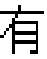 ) as in yuukyuukyuuka ( 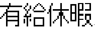 , paid holiday) and "ko" ( 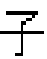 ) as in kodomo ( 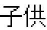 , children)) as illustrated in a first row of FIG. 5, the speech recognition unit 201 outputs a character string " 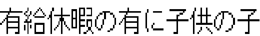 " ("Yuu" ( 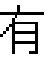 ) as in yuukyuukyuuka ( 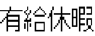 , paid holiday) and "ko" ( 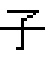 ) as in kodomo ( 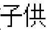 , children)) through speech recognition. In this case, there is a possibility that existing speech recognition systems output the character string " 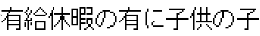 " obtained through the speech recognition, as it is. On the other hand, according to the present embodiment, it is possible to perform text analysis on the character string obtained through the speech recognition with reference to the emendatory speech data, determine that " 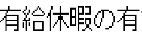 " ("Yuu" ( 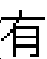 ) as in yuukyuukyuuka ( 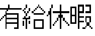 , paid holiday)) means designation of emendation of kanji on the basis of the speech recognition result, and determine that " 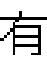 " (Yuu) is an emendation target. In addition, it is possible to determine that " 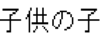 " ("ko" ( 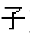 ) as in kodomo ( 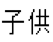 , children)) means designation of emendation of kanji, and determine that " 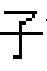 " (ko) is another emendation target. Accordingly, as illustrated in the first row of FIG. 5, a final output result shows " 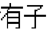 " (Yuuko) that uses kanji desired by the user. It is possible to input kanji desired by the user even in the case where there are many kanji candidates corresponding to pronunciation of "Yuuko".

Alternatively, in the case where a user says "shiratorinotoriwatottorinotori" ( 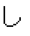 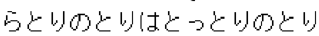 , use " 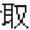 " (tori) as in " 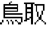 " (tottori) for " 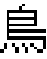 " (tori) in " 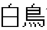 " (shiratori)) as illustrated in a second row of FIG. 5, the speech recognition unit 201 outputs a character string " 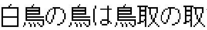 " (use " 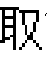 " (tori) as in " 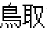 " (tottori) for " 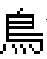 " (tori) in " 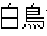 " (shiratori)) through speech recognition. In this case, there is a possibility that existing speech recognition systems output the character string " 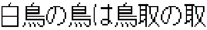 " obtained through the speech recognition, as it is. On the other hand, according to the present embodiment, it is possible to perform text analysis on the character string obtained through the speech recognition with reference to the emendatory speech data, determine that " 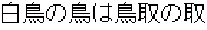 " (use " 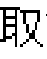 " (tori) as in " 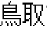 " (tottori) for " 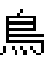 " (tori) in " 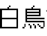 " (shiratori)) means designation of emendation of kanji on the basis of the speech recognition result, and determine that " 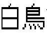 " (shiratori) is an emendation target. Accordingly, as illustrated in the first row of FIG. 5, a final output result shows " 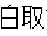 " (shiratori) that uses kanji desired by the user- It is possible to input kanji desired by the user even in the case where there are many kanji candidates corresponding to pronunciation of "shiratori".

### (C) Emendation part and operation order

In addition, it is also possible to designate an emendation target range and contents of the emendation by voice. Examples of user speeches and analysis results of emendatory information are listed below, for example.

**[Table 1]**

| Speech recognition of user speech | Emendatory information |
|---|---|
| ┌ 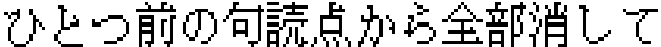 ┘ | Emendation designation: delete (" 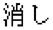 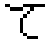 ") |
| (delete the sentences after the lastpunctuation but one from here) | Emendation target: sentences after the last punctuation but one from here |
| ┌ 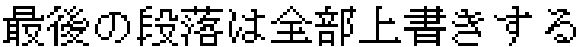 ┘ | Emendation designation: overwrite |
| (overwrite all the sentences in the last paragraph) | Emendation target: all the sentences in the last paragraph |
| ┌ 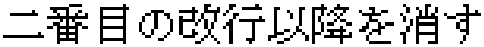 ┘ | Emendation designation: delete (" 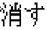 ") |
| (delete sentences after the second line break) | Emendation target: sentences after the second line break |
| ┌ 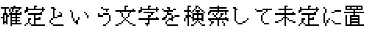 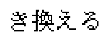 ┘ | Emendation designation: replace with " 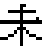 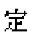 " (yet-to-be-determined) (" 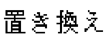 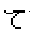 ") |
| (search for the word " 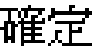 " (determined)and replace it with " 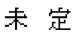 " (yet- to- be-determined)) | Emendation target: " 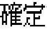 " (determined) |
| ┌ 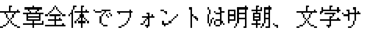 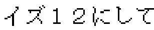 ┘ | Emendation designation: change the typeface to the mincho typeface and change the font size to 12 points |
| (use a mincho typeface and a font size of 12 points throughout the document) | Emendation target: throughout the document |
| ┌ 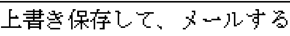 ┘ | Emendation designation: save and e-mail |
| (save and e-mail it) | Emendation target: throughout the document |
| ┌ 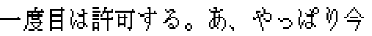 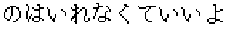 ┘ | Emendation designation: delete (" 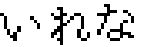 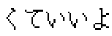 ") |
| (the first one is permitted. Oh, wait, please delete it) | Emendation target: " 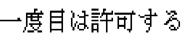 " (the first one is permitted.) |

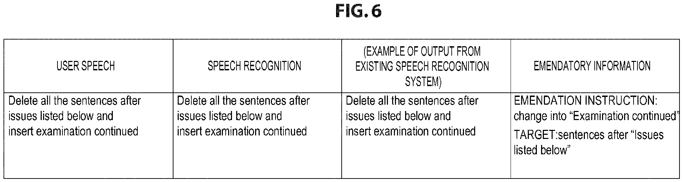

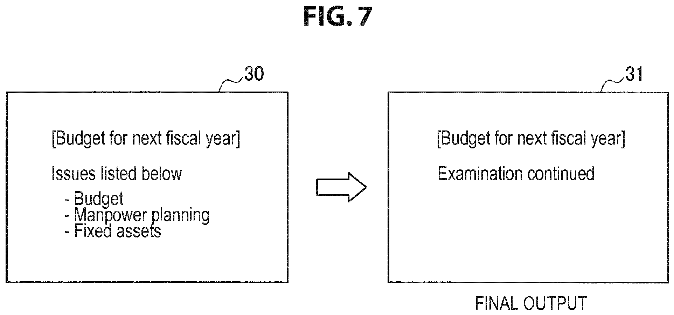

In addition, with reference to FIG. 6 and FIG. 7, an example thereof will be described. FIG. 6 is a diagram illustrating an example of a user speech and a result of analyzing emendatory information according to the present embodiment. In the case where a user says "delete all the sentences after issues listed below and insert examination continued" as illustrated in FIG. 6, the speech recognition unit 201 outputs a character string "Delete all the sentences after issues listed below and insert examination continued" through speech recognition. In this case, there is a possibility that existing speech recognition systems output the character string "Delete all the sentences after issues listed below and insert examination continued" obtained through the speech recognition, as it is. On the other hand, according to the present embodiment, it is possible to perform text analysis on the character string obtained through the speech recognition with reference to the emendatory speech data, determine "emendation designation: change into 'Examination continued'" and "emendation target: sentences after 'Issues listed below'" on the basis of the speech recognition result.

FIG. 7 is a diagram illustrating an example of a final output result in response to the user speech illustrated in FIG. 6. As illustrated in FIG. 7, a screen 31 is output as a final output result. In the screen 31, the sentences after "Issues listed below" are deleted from input sentences displayed in a screen 30, and the sentences after "Issues listed below" is replaced with "Examination continued".

### (D) Utilization of context information

Next, an example of an emendation process performed in view of context information will be described. According to the present embodiment, it is possible to perform the text analysis in view of a captured image or sensor information acquired at a time of a user speech, and perform emendatory analysis.

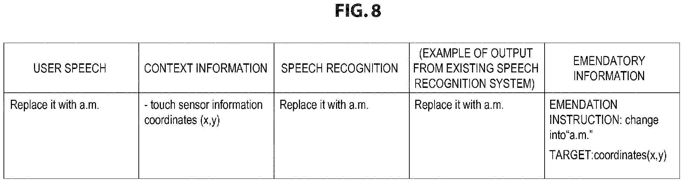

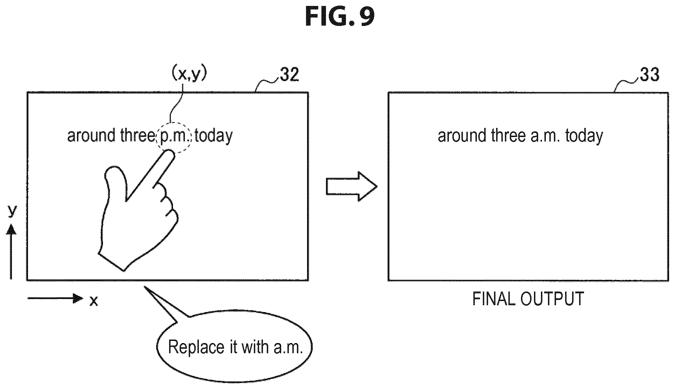

Here, with reference to FIG. 8 and FIG. 9, an example of using sensor information detected by a touch sensor installed in the display unit 15 will be described. FIG. 8 is a diagram illustrating an example of a user speech and a result of analyzing emendatory information in view of context information according to the present embodiment. In the case where a user says "replace it with a.m." as illustrated in FIG. 8, the speech recognition unit 201 outputs a character string "Replace it with a.m." through speech recognition. In addition, sensor information is acquired. The sensor information indicates positional coordinates (x,y) on the screen detected by the touch sensor of the display unit 15 at the time of the user speech.

In this case, there is a possibility that existing speech recognition systems output the character string "Replace it with a.m." obtained through the speech recognition, as it is. On the other hand, according to the present embodiment, it is possible to perform text analysis on the character string obtained through the speech recognition with reference to the emendatory speech data and touch sensor information, and determine "emendation designation: change into 'a.m.'" and "emendation target: coordinates (x,y)".

FIG. 8 is a diagram illustrating an example of a final output result in response to the user speech illustrated in FIG. 8. As illustrated in FIG. 8, a screen 33 is output as a final output result. In the screen 33, the word "p.m." corresponding to the coordinates (x,y) of the position touched by the user is deleted from input sentences displayed in a screen 32, and the word "p.m." is replaced with "a.m.".

The example in which the coordinate position on the screen is detected by the touch sensor has been described above. However, the present embodiment is not limited thereto. The same can be achieved by accurately detecting a gaze of the user. In other words, for example, a gaze sensor (gaze tracker) detects a position on the screen seen by the user when the user says "replace it with a.m.", and then the position is considered as the context information.

In addition, when it is possible to specify a part, range, or region of interest on the screen by using the gaze of the user, it is also possible to automatically narrow down candidates desired by the user among a plurality of options displayed on the screen.

In addition, in the case where a position on a screen is designated by using a word such as "it" or "around here", it is possible to give feedback to the user by changing the color of the background of a character string part corresponding to the coordinates (x,y), and confirm the part or range of interest, according to the present embodiment. In this case, the user may give a response by voice such as "That's OK" or "No".

### (E) Usage of keyword

Next, an example of an emendation process performed in the case where a specific keyword is extracted from a user speech that is obtained through speech recognition, will be described. In the case where a user says "A as in Adam, D as in Denver, and T as in Thomas", the speech recognition unit 201 outputs a character string "A as in Adam, D as in Denver, and T as in Thomas" through speech recognition. In this case, there is a possibility that existing speech recognition systems output the character string "A as in Adam, D as in Denver, and T as in Thomas" obtained through the speech recognition, as it is. On the other hand, according to the present embodiment, it is possible to perform text analysis on the character string obtained through the speech recognition with reference to the emendatory speech data. In the case where keywords used for telling how to spell alphabets are extracted such as "Adam", "Denver", and "Thomas" from the speech recognition result, "emendation designation: alphabets" and "emendation target: 'A', 'D', 'T'" are determined. Accordingly, a final output result shows "ADT" spelled in a way desired by the user.

The communication unit 21 connects with an external device and transmits/receives data. For example, the communication unit 21 receives voice information and context information of a user speech from the client terminal 1, and transmits the above-described speech recognition process result, text analysis process result, or final output decision process result to the client terminal 1.

The emendatory speech DB 22 is a storage unit configured to store much emendatory speech data collected in advance. The emendatory speech DB 22 is implemented by a storage device including a storage medium, a recording device which records data in the storage medium, a reader device which reads data from the storage medium, a deletion device which deletes data recorded in the storage medium, and the like. For example, the emendatory speech data includes keywords and example sentences that are used in emendatory speeches.

### <<3. Operation process>>

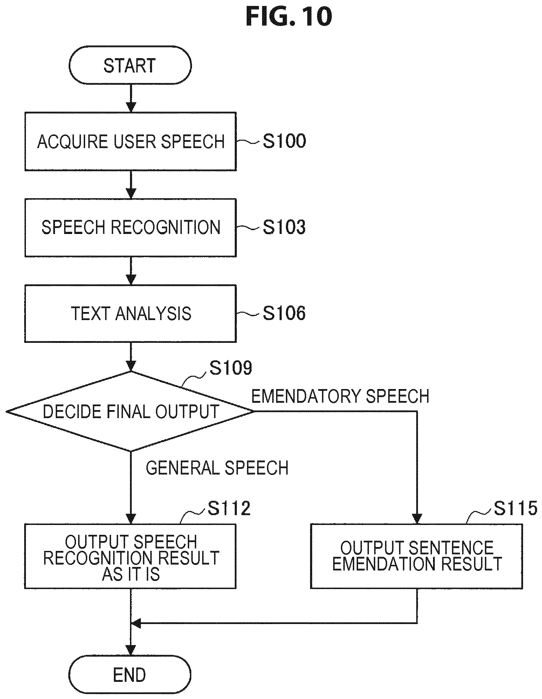

Next, with reference to FIG. 10, an operation process of the information processing system according to the present embodiment will be described. FIG. 10 is a flowchart illustrating the operation process of the information processing system according to the present embodiment. The process described below may be performed by at least any of the control unit 10 of the client terminal 1 or the control unit 20 of the server 2.

As illustrated in FIG. 10, a user speech (voice information) is first acquired (Step S100), and speech recognition is performed on the user speech (Step S103).

Next, text analysis is performed on a character string output through the speech recognition (Step S106). Specifically, emendatory-speechness of the character string is analyzed with reference to the emendatory speech data. In addition, in the case where the character string is an emendatory speech, analysis of emendatory information is performed. It is also possible to use context information acquired when the user speaks.

Next, final output is decided on the basis of a text analysis result (Step S109). In this case, it is also possible to use the context information acquired when the user speaks.

Next, in the case where it is determined that the user speech is a general speech in accordance with the final output decision, the character string of the speech recognition result is output as it is (Step S112).

On the other hand, in the case where it is determined that the user speech is an emendatory speech in accordance with the final output decision, a sentence is emended and a result of the emendation is output (Step S115).

The operation process of the information processing system according to the embodiment has been described above.

### <<4. Another system configuration>>

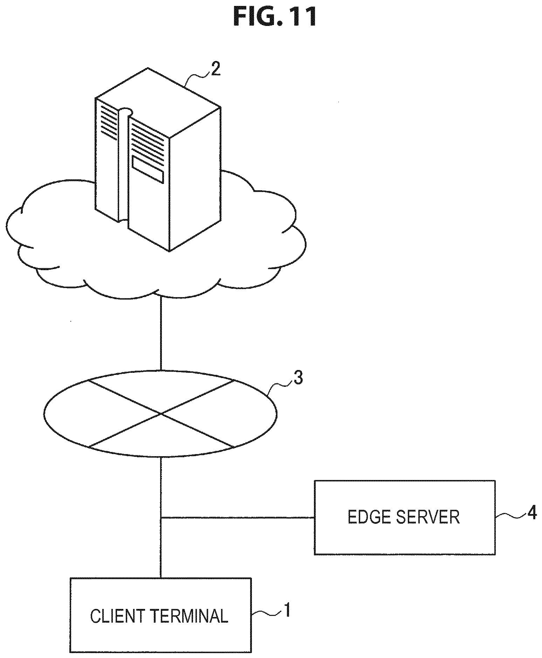

The configuration of the information processing system according to the present embodiment is not limited to the example illustrated in FIG. 1. For example, as illustrated in FIG. 11, the system may include an edge server 4 that is capable of distributing the process. FIG. 11 is a diagram illustrating another system configuration according to the present embodiment. As illustrated in FIG. 11, the another system includes the client terminal 1, the server 2, and the edge server 4.

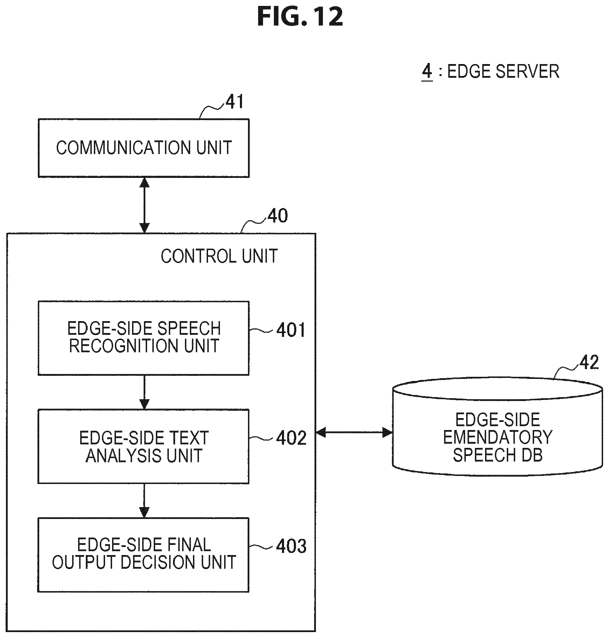

FIG. 12 illustrates a configuration example of the edge server 4 according to the present embodiment. As illustrated in FIG. 12, the edge server 4 includes a control unit 40, a communication unit 41, and an edge-side emendatory speech DB 42. The control unit 40 also functions as an edge-side speech recognition unit 401, an edge-side text analysis unit 402, and an edge-side final output decision unit 403. The edge-side speech recognition unit 401 is a subset of the speech recognition unit 201 of the server 2 (hereinafter, also referred to as an external subset). The edge-side text analysis unit 402 is an external subset of the text analysis unit 202. The edge-side final output decision unit 403 is an external subset of the final output decision unit 203.

The edge server 4 is a processing server whose scale is smaller than the server 2. However, the edge server 4 is placed near the client terminal 1 in terms of communication distance, the accuracy of the edge server 4 is higher than the client terminal 1, and the edge server 4 is capable of shortening a communication delay.

In the case where the process is not sufficiently performed using the subsets of the client terminal 1 or in the case where an error occurs, the client terminal 1 may transmit data to the edge server 4, request the edge server 4 to perform the process, receives a result of the process from the edge server 4, and use the result. Alternatively, the client terminal 1 may transmit data to the edge server 4 and the server 2, request the edge server 4 and the server 2 to perform the process while performing the process using the subsets of the client terminal 1, and select data to be used by waiting results of the process from the edge server 4 and the server 2 a predetermined period of time and referring to scores indicating confidence ratings of the respective results of the process.

### <<5. Conclusion>>

As described above, when using the information processing system according to the present embodiment, it is possible to emend sentences by inputting voice.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, it is also possible to create a computer program for causing hardware such as a CPU, ROM, and RAM, which are embedded in the above described client terminal 1 or server 2, to execute the functions of the client terminal 1 or the server 2. Moreover, it is possible to provide a computer-readable storage medium having the computer program stored therein.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1)
   An information processing device including:
   a transmission unit configured to transmit voice information including an emendatory command and an emendation target of a sentence; and
   a reception unit configured to receive a process result based on the emendatory command and the emendation target.
(2) The information processing device according to (1),
   in which the voice information is collected user voice data.
(3) The information processing device according to (1),
   in which the voice information is feature amount data extracted from collected user voice data.
(4) The information processing device according to (1),
   in which the voice information is data indicating an emendatory command and an emendation target that are recognized in collected user voice data.
(5) The information processing device according to any one of (1) to (4), in which
   the transmission unit transmits context information at a time of voice input in addition to the voice information, and
   the reception unit receives a process result based on the emendatory command, the emendation target, and the context information.
(6) The information processing device according to (5), in which the context information is sensor information obtained by detecting a motion of a user.
(7) The information processing device according to (5),
   in which the context information is feature amount data extracted from sensor information obtained by detecting a motion of a user.
(8) The information processing device according to (5),
   in which the context information is data indicating a result recognized in sensor information obtained by detecting a motion of a user.
(9) The information processing device according to any one of (1) to (8),
   in which the process result received by the reception unit includes at least any of a speech recognition result of the transmitted voice information, a text analysis result, or emendatory information based on the emendatory command and the emendation target that are included in the voice information.
(10) The information processing device according to (9),
   in which the process result includes data indicating a confidence rating of the process result.
(11) The information processing device according to (9) or (10),
   in which the emendatory information includes an emendation result obtained by processing an emendation target on a basis of a finally decided emendatory command.
(12) An information processing device including:
   a reception unit configured to receive voice information including an emendatory command and an emendation target of a sentence; and
   a transmission unit configured to transmit a process result based on the emendatory command and the emendation target.
(13) The information processing device according to (12),
   in which the process result transmitted by the transmission unit includes at least any of a speech recognition result of the received voice information, a text analysis result, or emendatory information based on the emendatory command and the emendation target that are included in the voice information.
(14) The information processing device according to (13),
   in which the process result includes data indicating a confidence rating of the process result.
(15) The information processing device according to (13) or (14),
   in which the emendatory information includes an emendation result obtained by processing an emendation target on a basis of a finally decided emendatory command.
(16) The information processing device according to any one of (12) to (15), in which
   the reception unit receives context information at a time of voice input in addition to the voice information, and
   the transmission unit transmits a process result based on the emendatory command, the emendation target, and the context information.
(17) An information processing method including, by a processor:
   transmitting voice information including an emendatory command and an emendation target of a sentence; and
   receiving an analysis result based on the emendatory command and the emendation target.
(18) An information processing method including, by a processor:
   receiving voice information including an emendatory command and an emendation target of a sentence; and
   transmitting an analysis result based on the emendatory command and the emendation target.

### Reference Signs List

- 1: client terminal
- 10: control unit
- 101: local speech recognition unit
- 102: local text analysis unit
- 103: local final output decision unit
- 11: voice input unit
- 12: imaging unit
- 13: sensor
- 14: communication unit
- 15: display unit
- 16: storage unit
- 2: server
- 20: control unit
- 201: speech recognition unit
- 202: text analysis unit
- 203: final output decision unit
- 21: communication unit
- 22: emendatory speech DB
- 3: network
- 4: edge server
- 40: control unit
- 401: edge-side speech recognition unit
- 402: edge-side text analysis unit
- 403: edge-side final output decision unit
- 41: communication unit
- 42: edge-side emendatory speech DB

## Claims

1. An information processing device comprising:
a transmission unit configured to transmit voice information including an emendatory command and an emendation target of a sentence; and
a reception unit configured to receive a process result based on the emendatory command and the emendation target.

2. The information processing device according to claim 1,
wherein the voice information is collected user voice data.

3. The information processing device according to claim 1,
wherein the voice information is feature amount data extracted from collected user voice data.

4. The information processing device according to claim 1,
wherein the voice information is data indicating an emendatory command and an emendation target that are recognized in collected user voice data.

5. The information processing device according to claim 1, wherein
the transmission unit transmits context information at a time of voice input in addition to the voice information, and
the reception unit receives a process result based on the emendatory command, the emendation target, and the context information.

6. The information processing device according to claim 5,
wherein the context information is sensor information obtained by detecting a motion of a user.

7. The information processing device according to claim 5,
wherein the context information is feature amount data extracted from sensor information obtained by detecting a motion of a user.

8. The information processing device according to claim 5,
wherein the context information is data indicating a result recognized in sensor information obtained by detecting a motion of a user.

9. The information processing device according to claim 1,
wherein the process result received by the reception unit includes at least any of a speech recognition result of the transmitted voice information, a text analysis result, or emendatory information based on the emendatory command and the emendation target that are included in the voice information.

10. The information processing device according to claim 9,
wherein the process result includes data indicating a confidence rating of the process result.

11. The information processing device according to claim 9,
wherein the emendatory information includes an emendation result obtained by processing an emendation target on a basis of a finally decided emendatory command.

12. An information processing device comprising:
a reception unit configured to receive voice information including an emendatory command and an emendation target of a sentence; and
a transmission unit configured to transmit a process result based on the emendatory command and the emendation target.

13. The information processing device according to claim 12,
wherein the process result transmitted by the transmission unit includes at least any of a speech recognition result of the received voice information, a text analysis result, or emendatory information based on the emendatory command and the emendation target that are included in the voice information.

14. The information processing device according to claim 13,
wherein the process result includes data indicating a confidence rating of the process result.

15. The information processing device according to claim 13,
wherein the emendatory information includes an emendation result obtained by processing an emendation target on a basis of a finally decided emendatory command.

16. The information processing device according to claim 12, wherein
the reception unit receives context information at a time of voice input in addition to the voice information, and
the transmission unit transmits a process result based on the emendatory command, the emendation target, and the context information.

17. An information processing method comprising, by a processor:
transmitting voice information including an emendatory command and an emendation target of a sentence; and
receiving an analysis result based on the emendatory command and the emendation target.

18. An information processing method comprising, by a processor:
receiving voice information including an emendatory command and an emendation target of a sentence; and
transmitting an analysis result based on the emendatory command and the emendation target.
